Europäisches Patentamt

European Patent Office

Office européen des brevets

(11) Veröffentlichungsnummer: **0 411 262 A1**

## EUROPÄISCHE PATENTANMELDUNG

(21) Anmeldenummer: 90109797.2

(51) Int. Cl.⁵: **B62D 25/16**

(22) Anmeldetag: 23.05.90

Die Bezeichnung der Erfindung wurde geändert (Richtlinien für die Prüfung im EPA, A-III, 7.3).

(30) Priorität: 06.06.89 DE 3918387

(43) Veröffentlichungstag der Anmeldung:
06.02.91 Patentblatt 91/06

(84) Benannte Vertragsstaaten:
AT BE DE ES FR GB NL

(71) Anmelder: **Klöckner-Humboldt-Deutz Aktiengesellschaft**
**Deutz-Mülheimer-Strasse 111 Postfach 80 05 09**
**D-5000 Köln 80(DE)**

(72) Erfinder: **Vogel, Walter**
**Brüsseler Strasse 93**
**D-5000 Köln 90(DE)**

(54) Einstellbarer Kotflügel für die gelenkten Räder eines Fahrzeuges.

(57)
1. Vorrichtung, mit der Kotflügel von gelenkten Fahrzeugrädern, insbesondere Schleppervorderräder, einstellbar sind.

2.1. Bekannte Vorrichtungen zeigen einen aufwendigen Aufbau, der nicht der Forderung gerecht wird, eine wirksame Kotflügelverstellung darzustellen, angepaßt an verschiedene Bodenverhältnisse, Radgrößen und Spurweiten.

2.2. Zur Darstellung einer im Aufbau einfachen, ausreichend robusten Vorrichtung sieht die erfindungsgemäße Vorrichtung einen Kotflügel (1) vor, der über lediglich einen Träger (10), verbunden mit dem Schwenkarm (11) mittels einer Konsole (12) am Achsschenkel (17) angelenkt ist. Durch entsprechend ausgebildete Schraubverbindungen (13) bzw. Verschraubungen (22, 23, 9) ist die Schutzschale (3) des Kotflügels (1) einstellbar.

2.3. Mit der vorgestellten Vorrichtung ist der Kotflügel (1) sowohl schwenkbar wie auch axial verschiebbar sowie an unterschiedliche Radgrößen anpaßbar.

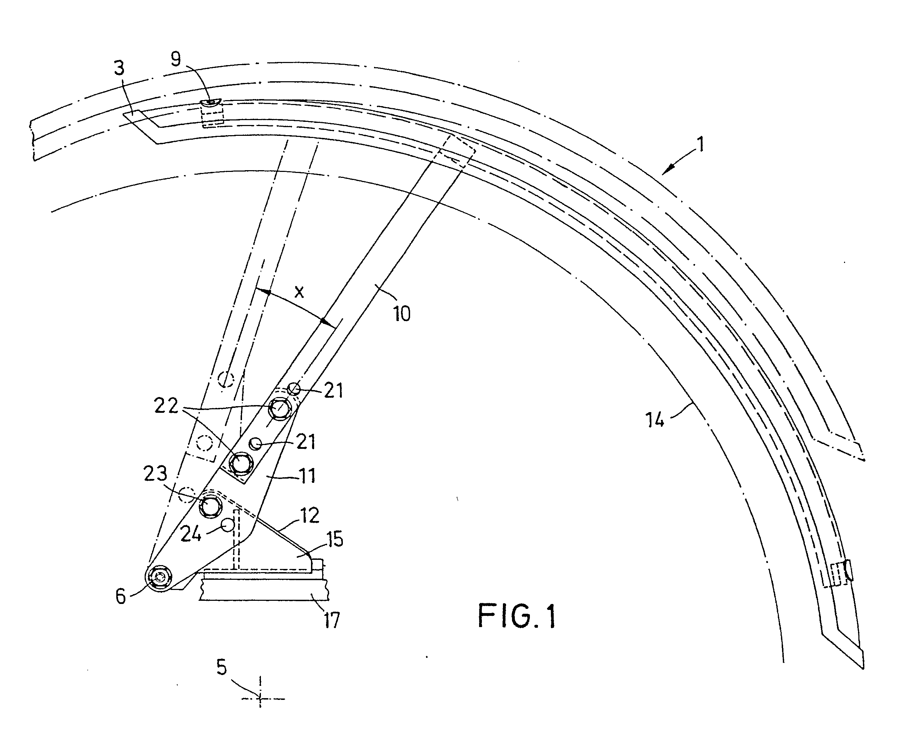

3. Der Fig. 1 ist in einer Seitenansicht der wesentliche Aufbau der Vorrichtung zu entnehmen.

FIG.1

EP 0 411 262 A1

## IN VERSCHIEDENEN RICHTUNGEN EINSTELLBARER KOTFLÜGEL

Die Erfindung betrifft einen verstellbaren Kotflügel für gelenkte Vorderräder von Fahrzeugen nach dem Oberbegriff des ersten Anspruchs.

Ein Kotflügel dieser Gattung ist in dem DE-GM 19 76 093 beschrieben. Dieser Druckschrift sind verschiedene verschwenkbare Kotflügel zu entnehmen, die mittels eines Trägers mit dem Achsschenkel einer lenkbaren Vorderachse eines Schleppers verbunden sind. Dieser bekannte Stand der Technik beschränkt sich ausschließlich auf die Verschwenkbarkeit der Kotflügel, wozu verschiedene Lösungen aufgezeigt sind. Gemäß Fig. 1 und 2 wird der gesamte Kotflügel um einen Dreh- und Haltepunkt geschwenkt. Dagegen kann den Figuren 3 und 4 ein aus zwei Segmenten bestehender durch ein Gelenk verbundener Kotflügel entnommen werden, bei dem das obere Teil starr mit dem Achsschenkel verbunden ist und das untere im Bedarfsfall nach oben schwenkbar ausgebildet ist. Der Fig. 5 ist darüber hinaus eine verschwenkbare Kotflügelanordnung zu entnehmen, bei der sich der radiale Abstand zwischen dem Kotflügel und der Radaußenkontur beim Verschwenken unverändert, erreichbar durch einen dem Krümmungsradius der Radaußenkontur nachempfundenen Halter, der mit einem Langloch versehen ist.

Diesen bekannten Lösungen ist eine nicht ausreichend robust gestaltete verschwenkbare Kotflügelausbildung gemeinsam, die für den rauhen Fahrzeugeinsatz in der Landwirtschaft ungeeignet ist. So ist z. B. der kombinierte Dreh- und Haltepunkt ohne weitere Befestigung für den verschwenkbaren Kotflügel unzureichend, wie auch die aus zwei Segmenten angeordnete Kotflügelgestaltung. Dem bekannten Stand der Technik ist des weiteren keine Anpassung des Kotflügels an geänderte Spurweiten bzw. Raddurchmesser zu entnehmen, die eine häufig an Ackerschlepper für unterschiedliche Einsatzzwecke gestellte Forderung darstellen.

Der Erfindung liegt daher die Aufgabe zugrunde, eine Kotflügelverstellmöglichkeit aufzuzeigen, die allen Einsatzbedingungen für Schlepper gerecht wird.

Die Aufgabe wird erfindungsgemäß durch die kennzeichnenden Merkmale des Anspruchs 1 gelöst.

Erfindungsgemäß ist vorgesehen, den von einem Träger gehaltenen Kotflügel mittels einer Konsole und eines Schwenkarms am Achsschenkel zu befestigen. Durch das Zusammenwirken von drei Bauteilen wird vorteilhaft erreicht, den Kotflügel in drei Richtungen einzustellen, wobei die Einstellung vorteilhaft in unmittelbarer Nähe der Kotflügelanlenkung am Achsschenkel erfolgen kann. Der längeneinstellbar am Schwenkarm befestigte Träger erlaubt eine Anpassung an unterschiedliche Rad- bzw. Reifengrößen und vorbestimmbare radiale Abstände zwischen dem Kotflügel und der Radaußenkontur. Weiter sieht die Erfindung vor, daß der Kotflügel um einen an der Konsole festgelegten Drehpunkt nach Lösen einer im Abstand vom Drehpunkt angeordneten und in verschiedenen Positionen einstellbaren Ver schraubung schwenkbar ist. Zur Anpassung an verschiedene Spurweiten bzw. Radstände, welche beispielsweise mittels Verstellfelgen erreichbar sind, sieht die Erfindung weiter eine einstellbare Befestigung der Konsole auf einem Vorderachsbauteil vor, welches der Längsbewegung folgt, zur Verschiebung der gesamten Kotflügeleinheit parallel zur Vorderachse.

Die im Abstand vom Drehpunkt angeordnete Verschraubung des Schwenkarms bringt vorteilhaft eine Versteifung der Anbindung des Kotflügelträgers am Achsschenkel im Gegensatz zu einem kombinierten Dreh- und Haltepunkt des Trägers. Außerdem stellt die erfindungsgemäße Lösung im Bereich des für den Träger größten auftretenden Biegemoments durch den verstärkt ausgebildeten Schwenkarm eine vorteilhafte Versteifung dar.

In Ausgestaltung der Erfindung ist weiter vorgesehen, die Einstellung bzw. Verstellung des Kotflügels stufenlos auszubilden beispielsweise indem die jeweils miteinander verschraubten Bauteile wie Träger und Schwenkarm, Schwenkarm und Konsole bzw. Konsole und Achsschenkel in Langlöchern verschiebbar ausgebildet sind. Alternativ bietet sich dazu eine gestufte Verstellung an durch vorgegebene best. Lochabstände, eingebracht in den zusammenwirkenden Bauteilen.

Zur Erreichung einer schnellen Verschwenkbarkeit des Kotflügels ohne Verwendung eines Werkzeuges ist weiter gemäß der vorliegenden Erfindung vorgesehen, ein Federglied beispielsweise zwischen dem Träger und dem Schwenkarm so auszubilden, daß durch Überwindung der Kraft einer Zugfeder und einem damit verbundenen Totpunkt der Kotflügel in zwei Endlagen bringbar ist.

Zur Darstellung eines kostengünstigen Kotflügels bei gleichzeitiger Gewichtseinsparung ist vorgesehen, die Schutzschale des Kotflügels aus einem elastischen Material auszubilden beispielsweise aus Kunststoff. Aufgrund von Versuchsergebnissen hat sich ein Schwenkwinkel des Kotflügels von ca. 17° als ausreichend erwiesen sowie eine Erstreckung des Kotflügels über einen Bereich von ca. 90° des Radumfanges, um so den Einschlagwinkel der Räder im Bedarfsfall zu vergrößern, das Beschädigen der Kotflügel zu verhindern beim Durchfahren eines tiefgründigen Bodens und zur Verhinderung einer unnötigen Verschmutzung der Kabine, insbesondere der Frontscheibe, bei schneller Straßenfahrt.

Durch den außermittig oberhalb der Radmitte angeordnetem Drehpunkt der Kotflügelverschwenkeinrichtung stellt sich vorteilhaft ein im unteren Bereich größerer radialer Abstand zwischen Kotflügel und Radaußenkontur im Vergleich zum oberen Abstand ein, wodurch ein Zusetzen des Kotflügels verhindert wird.

Durch die Anordnung einer weiteren einstellbaren Befestigung zwischen dem einarmigen Träger und der Schutzschale des Kotflügels ergibt sich vorteilhaft die Möglichkeit im Bedarfsfall den Kotflügel in einem gleichen radialen Abstand zwischen Kotflügel und Radaußenkontur an den Endpunkten des Kotflügels einstellen zu können, was insbesondere bei Verwendung unterschiedlicher Radgrößen sinnvoll ist.

Zur weiteren Einstellbarkeit ist weiter vorgesehen die Schutzschale des erfindungsgemäßen Kotflügels axial zum Halteprofil einstellen zu können. Damit kann die TÜV-For derung erfüllt werden, die gesamte Reifenbreite mit dem Kotflügel abzudekken und außerdem durch ein Verschieben der Schutzschale jeweils zur Fairzeugmitte den Koftflügel gegen Beschädigungen, z. B. bei engen Durchfahrten, zu schützen.

Eine Verringerung der Varianten mit dem Vorteil einer Kostensenkung bewirkt die Möglichkeit, die Konsole so auszubilden, daß diese an beiden Vorderrädern einsetzbar ist. Weiter ergibt sich durch diese Möglichkeit auch ein weiter Einstellbereich des gesamten Kotflügels in axialer Richtung von bis zu 700 mm Unterschied.

Zur weiteren Erläuterung der Erfindung können die Zeichnungen herangezogen werden, die ein Ausführungsbeispiel darstellen und aus deren Figurenbeschreibung weitere Merkmale zu entnehmen sind.

Es zeigt:

Fig. 1: in einer Seitenansicht den erfindungsgemäßen vielfach verstellbaren Kotflügel,

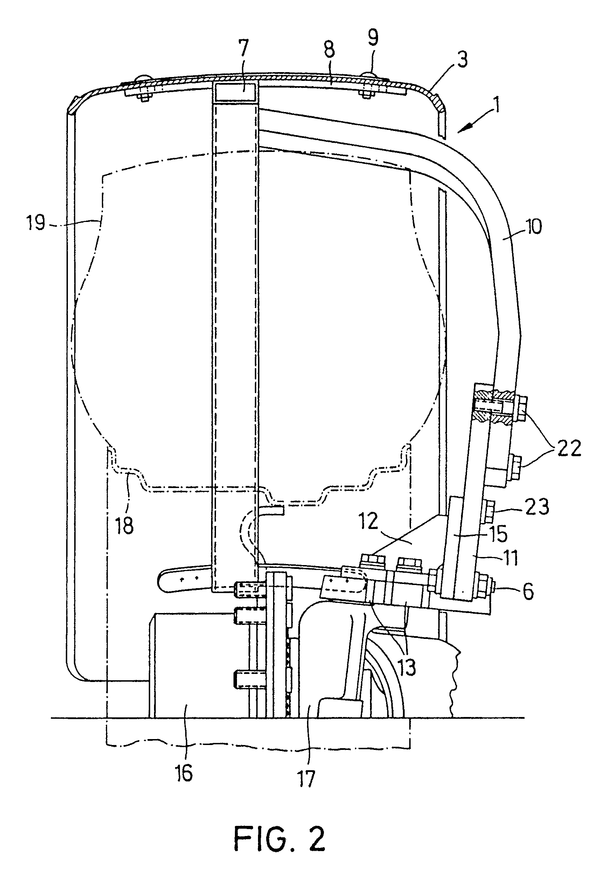

Fig. 2: den Kotflügel gemäß Fig. 1 in einer Vorderansicht im Zusammenwirken mit allen wesentlichen Bauteilen eines Vorderrades,

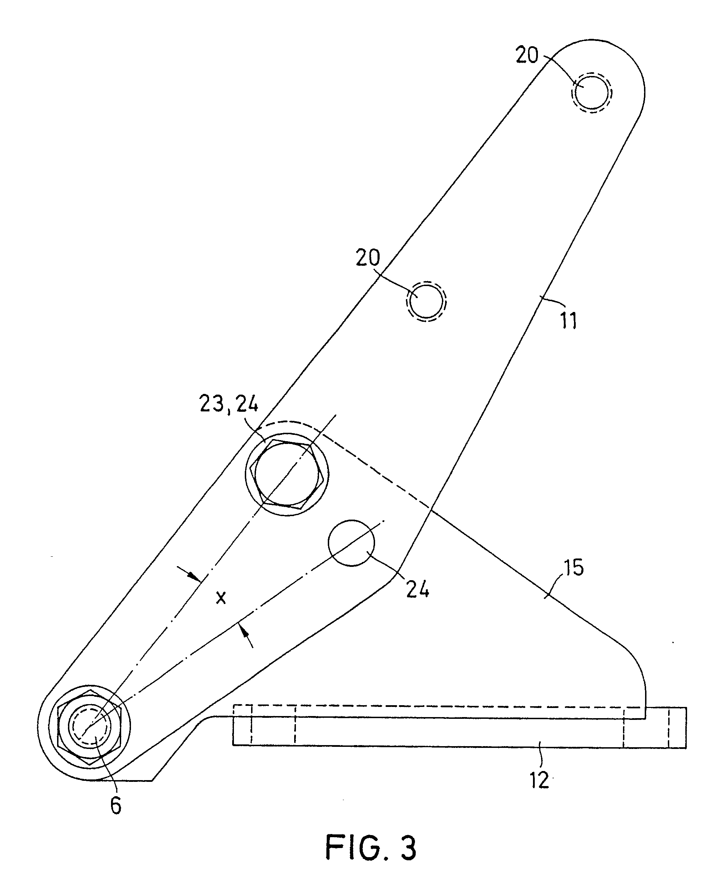

Fig. 3: in einer vergrößerten Darstellung die zur Verschwenkung des Kotflügels eingesetzten Bauteile.

In der Fig. 1 sind die zur Befestigung und Verstellung benötigten Bauteile des Kotflügels dargestellt einschließ lich der Schutzschale 3. Der Vorderradaufbau zeigt den üblichen Aufbau mit der zentrisch angeordneten Radnabe 16 an der die Felge 18 mit dem am Außenumfang eingezogen Reifen 19 über einen Schraubenkranz verbunden ist. Die Zeichnung verdeutlicht die Anbindung des Kotflügels am andeutungsweise dargestellten Achsschenkel 17, wobei die Befestigung oberhalb der Radmitte 5 erfolgt. Wie Fig. 2 zeigt, ist oberhalb des Achsschenkels 17 eine Konsole 12 mittels einer Schraubverbindung 13 befestigt. Rechtwinklig und seitlich in Richtung Fahrzeugmitte versetzt zur Auflage der Konsole 12 am Achsschenkel 17 weist die Konsole 12 ein Formstück 15 auf. Auf der zur Fahrzeugmitte hin gerichteten Seite des Formstücks 15 liegt der Schwenkarm 11 an, welcher um den Drehpunkt 6 im Formstück 15 schwenkbar ist. Der Schwenkarm 11 weist zwei im radialen Abstand zum Drehpunkt 6 angeordnete Bohrungen 24 auf, die auf einem Kreisbogen mit dem Spreizmaß des Winkels α in den Schwenkarm 11 eingebracht sind. Die Fig. 3 verdeutlicht weiter die Möglichkeit, den Schwenkarm 11 in zwei Positionen zu bringen, wobei durch Lösen der Verschraubung im Drehpunkt 6 bzw. Entfernen der Verschraubung 23 der Schwenkarm im Gegenuhrzeigersinn bis zur Übereinstimmung der Bohrung 24 mit der Gewindebohrung - eingebracht im Formstück 15 - verdreht wird. Auf der Verbindungslinie zwischen dem Drehpunkt 6 und der Verschraubung 23 weist der Schwenkarm 11 an seinem freien Ende zwei im Abstand voneinander angebrachte Gewindebohrungen 20 auf, in die, wie der Fig. 2 zu entnehmen ist, die Verschraubung 22 einsetzbar ist zur Befestigung des Trägers 10 am Schwenkarm 11. Der Träger 10 stellt eine Verbindung zwischen der Schutzschale 3 und dem Schwenkarm 11 dar, wobei die Schutzschale zur Aussteifung die Unterlage 8 aufweist, an der das Halteprofil 7 unlösbar verbunden ist. Aus Ge wichtsgründen und zur Erreichung eines Kostenvorteils bietet sich an, die Schutzschale 3 als Gummi- bzw. Kunststofformteil zu fertigen und diese mittels mehrerer Verschraubungen 9 an die Unterlage 8 zu befestigen. Wie in Fig. 1 dargestellt, erstreckt sich die Unterlage 8 nahezu über die gesamte Länge der Schutzschale 3. Als ein weiteres Bauteil zur Verbesserung der Festigkeit des Kotflügels 1 dient das Halteprofil 7, beispielsweise ausgebildet als ein Rechtkanthohlprofil, welches über die gesamte Länge weitestgehend außermittig zur Schutzschale 3 angeordnet ist. Mit Hilfe der Bohrungen 21, eingebracht in den Träger 10 (siehe Fig. 1) besteht die Möglichkeit, den radialen Abstand zwischen der Schutzschale 3 und der Radaußenkontur 14 zu verändern bzw. die Schutzschale 3 bzw. den Kotflügel 1 an unterschiedliche Radgrößen anzupassen.

Selbstverständlich bietet es sich an, durch Einbringung weiterer Bohrungen 21 oder Langlöcher in den Träger 10 eine Vielzahl von Einstellmöglichkeiten zu ermöglichen. Zur Anpassung des erfindungsgemäßen Kotflügels 1 an verschiedene Spurweiten ist beispielsweise daran gedacht, mehrere Bohrungen für die Schraubverbindung 13 innerhalb, der Konsole 12 zur Befestigung dieser am Achsschenkel 17 vorzusehen, oder diese als Langlöcher auszubilden zur Erreichung einer stufenlosen bzw. gestuften axialen Verschiebung des gesamten Kotflügels. Der in zwei Endlagen positionierbare Kotflügel 1 ist in Fig. 1 dargestellt, wobei die nach oben geschwenkte Stellung strichpunktiert dargestellt ist. Aufgrund des außermittig zur Radmitte 5 angeordneten Drehpunkts 6 für die Verschwenkung des Kotflügels 1 stellt sich abweichend zur unteren Kotflügelstellung (sichtbar gezeichnet) in der hochgestellten Position (strichpunktiert gezeichnet) ein $nterschiedlicher radialer Abstand zwischen der Schutzschale 3 und der Radaußenkontur 14 ein, der sich kontinuierlich verjüngt.

## Ansprüche

1. Einstellbarer Kotflügel für gelenkte Vorderräder von Fahrzeugen, insbesondere Schleppern, deren Aufbau unter anderem eine Schutzschale vorsieht, die mittels eines Trägers und eines Verbindungsgliedes an einem der Lenkbewegung der Vorderachse folgenden Bauteils angelenkt ist, dadurch gekennzeichnet, daß das Verbindungsglied des Kotflügels (1) einen Schwenkarm (11) und eine Konsole (12) aufweist, die über einen Drehpunkt (6) sowie eine im Abstand zum Drehpunkt (6) vorgesehenen Arretierung schwenkbar verbunden sind und daß die Verbindung zwischen dem Träger (10) und dem Schwenkarm (11) und/oder zwischen der Konsole (12) und einem der Lenkbewegung der Vorderachse folgenden Bauteils einstellbar ist.

2. Einstellbarer Kotflügel nach Anspruch 1 dadurch gekennzeichnet, daß die durch den Drehpunkt (6) weisende Schwenkachse im wesentlichen parallel zur Raddrehachse liegt, daß die Einstellbarkeit zwischen dem Träger (10) und der Schwenkarm (11) radial zum Rad und die Einstellbarkeit zwischen Konsole (12) und dem der Lenkbewegung der Vorderachse folgenden Bauteils axial zum Rad erfolgt.

3. Einstellbarer Kotflügel nach den Ansprüchen 1 und 2, dadurch gekennzeichnet, daß der Kotflügel (1) jeweils stufenlos einstellbar ist.

4. Einstellbarer Kotflügel nach den Ansprüchen 1 bis 3, dadurch gekennzeichnet, daß die Einstellung gestuft erfolgt.

5. Einstellbarer Kotflügel nach einem der vorhergehenden Ansprüche 1 bis 4, dadurch gekennzeichnet, daß zur Verschwenkung bzw. Arretierung des Kotflügels (1) ein Federglied eingesetzt ist.

6. Einstellbarer Kotflügel nach einem der vorhergehenden Ansprüche 1 bis 5, dadurch gekennzeichnet, daß der Kotflügel (1) eine elastische Schutzschale (3) aufweist.

7. Einstellbarer Kotflügel nach einem der vorhergehenden Ansprüche 1 bis 6, dadurch gekennzeichnet, daß der Kotflügel (1) zwischen zwei Endstellungen um einen Schwenkwinkel von 17° verstellbar ist.

8. Einstellbarer Kotflügel nach einem der vorhergehenden Ansprüche 1 bis 7, dadurch gekennzeichnet, daß der Kotflügel (1) ca. 90° des Radumfanges abdeckt.

9. Einstellbarer Kotflügel nach einem der vorhergehenden Ansprüche 1 bis 8, dadurch gekennzeichnet, daß der Träger (10) einstellbar mit der Schutzschale (3) verbunden ist.

10. Einstellbarer Kotflügel nach einem der vorhergehenden Ansprüche 1 bis 9, dadurch gekennzeichnet, daß durch die Verschraubung (9) die Schutzschale (3) axial zum Halteprofil (7) verschiebbar ist.

11. Einstellbarer Kotflügel nach einem der vorhergehenden Ansprüche 1 bis 10, dadurch gekennzeichnet, daß die Konsole (12) an beiden Vorderrädern einsetzbar ist.

FIG.1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | DE – U – 1 976 093<br>(XAVER FENDT & CO. MASCHINEN-<br>UND SCHLEPPERFABRIK)<br>* Gesamt * | 1 | B 62 D 25/16 |
| X | DE – A1 – 3 401 631<br>(XAVER FENDT & CO.)<br>* Gesamt * | 1,2,3,<br>4,5,7,<br>8,9,11 | |
| A | DE – A1 – 3 413 972<br>(KLÖCKNER-HUMBOLDT-DENTZ AG)<br>* Fig. 1-4; Seite 6, Zeilen<br>12,13 * | 1,6,8 | |
| | | | TECHNICAL FIELDS SEARCHED (Int. Cl.5) |
| | | | B 62 D |

The present search report has been drawn up for all claims

| Place of search | Date of completion of the search | Examiner |
|---|---|---|
| WIEN | 17-10-1990 | SCHMICKL |